# EUROPÄISCHE PATENTSCHRIFT

(11) **EP 0 722 139 B1**
(45) Veröffentlichungstag und Bekanntmachung des Hinweises auf die Patenterteilung: **07.07.1999**
(21) Anmeldenummer: 95100423.3
(22) Anmeldetag: 13.01.1995
(51) Int. Cl.: G06F 3/033

(54) **Eingabesystem für Computer**
Input system for computer
Système d'entrée de données d'ordinateur

(43) Veröffentlichungstag der Anmeldung: 17.07.1996
(73) Patentinhaber: DOKA Industrie GmbH, A-3300 Amstetten (AT)
(72) Erfinder: Aflenzer, Andreas, A-3331 Allhartsberg (AT); Steinberger, Friedrich, A-3371 St.Martin - Karlsbach (AT)
(74) Vertreter: Zangs, Rainer E., Dipl.-Ing.

(56) Entgegenhaltungen:
- EP-A- 0 393 844
- EP-A- 0 421 818
- US-A- 5 159 664

## Beschreibung

Die Erfindung betrifft ein Eingabesystem für Computer, insbesondere Computer zur Erfassung der geometrischen Daten von Bauwerken und Bauwerkselementen.

Für die Einschalung von Bauwerken sind Programme bekannt, die ausgehend von den Daten des geplanten Bauwerks sämtliche Schalungselemente zusammenstellen, die für die Schalung des Bauwerks erforderlich sind, und die einen Schalungsplan angeben, nach dem die Verschalung auf der Baustelle angefertigt werden kann. Die Algorithmen sind äußerst kompliziert und werden bislang nur Verbindung mit komplexen CAD-Programmen eingesetzt, die die Bauwerksdaten in einer prozessierbaren Form bereitstellen. Die Anwendung derartiger CAD-Programme für den Entwurf eines Bauwerks erfordert neben dem hohen Aufwand im Bereich der Hard- und Software auch ein großes Maß an Erfahrung im Umgang mit dem CAD-Programm. Für die Erfassung einfacher Bauwerke sind diese Programme in der Regel überdimensioniert und daher ungeeignet; für Anwender, die lediglich von Zeit zur Zeit mit Programmen dieser Art arbeiten, sind sie nur schwer bedienbar. Es besteht daher der Bedarf nach einer einfacheren Möglichkeit, die Daten eines Bauwerks oder seiner Einzelelemente wie Wände, Decken, usw. zu erfassen, d.h. von einem geplanten Bauwerk datentechnisch verarbeitbare Angaben zu erhalten.

Die Erfassung von Bauwerksdaten gestaltet sich jedoch nicht einfach, selbst wenn es sich um ein vergleichsweise einfaches Bauwerk handelt. Die Hilfsmittel, die bislang zur Verfügung stehen, eignen sich für eine sporadische Anwendung nur sehr bedingt, da für die Eingabearbeit kaum Anhaltspunkte gegeben werden, an denen sich der Benutzer orientieren kann.

Die Aufgabe der Erfindung besteht somit darin, einen Computer für die Erfassung von Bauwerksdaten zu schaffen, der die Erfassung von Bauwerksdaten auf derart einfache Weise ermöglicht, daß ein Anwender auch ohne großen Lern- und/oder Übungsaufwand die Erfassung durchführen kann.

Diese Aufgabe wird gelöst durch einen Computer zur Erfassung der geometrischen Daten von Bauwerkselementen, mit einer Speichereinrichtung zur Speicherung der Daten, einer grafik-orientierten Anzeigeeinrichtung mit einem Anzeigebereich zur Darstellung einer Ansicht der Bauwerkselemente auf der Grundlage der gespeicherten Daten, einer Eingabeeinrichtung für das Eingeben und Ändern von Daten unter Ausnutzung und im Zusammenwirken mit der Anzeigeeinrichtung, wobei mit der Eingabeeinrichtung mittels eines im Anzeigebereich bewegbaren Zeigers ein Anzeigeelement, das im Anzeigebereich angezeigt wird, beeinflußbar ist, wobei das Anzeigeelement die folgenden Bereiche im Anzeigebereich festlegt:
- einen mit der Eingabeeinrichtung zusammenwirkenden, ersten Bereich zur Positionierung des Anzeigeelements,
- einen mit der Eingabeeinrichtung zusammenwirkenden, zweiten Bereich, der an dem ersten Bereich beginnt, zum Auslösen der Erfassung der Daten des durch diesen Bereich im Anzeigebereich festgelegten Bauwerkselements,
- einen mit der Eingabeeinrichtung zusammenwirkenden, dritten Bereich, bis zu dem sich der zweite Bereich erstreckt, zur Änderung der Erstreckung des zweiten Bereichs zwischen dem ersten und dem dritten Bereichs, und
- mehrere mit der Eingabeeinrichtung zusammenwirkende vierte Bereiche zur Änderung der Lage des zweiten Bereichs des Anzeigeelements in dem der zweite Bereich am den ersten Bereich am einen durch die Lage des jeweiligen vierten Bereichs vorgegebenen Winkel gedreht wird und
wobei der dritte Bereich und die vierten Bereiche sternförmig um den ersten Bereich angeordnet sind.

In einer vorteilhaften Ausgestaltung legt das Anzeigeelement ferner einen fünften Bereich fest zur Änderung der Lage des zweiten Bereichs des Anzeigeelements von einer Lage unmittelbar oberhalb einer Verbindungslinie zwischen dem ersten und dem dritten Bereich in eine Lage unmittelbar unterhalb der Verbindungslinie.

In einer weiteren vorteilhaften Ausgestaltung legt das Anzeigeelement einen sechsten Bereich fest zur Verschiebung des Anzeigeelements derart, daß der erste Bereich die Position des dritten Bereichs einnimmt.

Die Erfindung löst die Aufgabe letztlich, indem ein Eingabehilfsmittel geschaffen wird, das die Erfassung von Bauwerksdaten auf sehr einfache und anschauliche Weise ermöglicht und dabei durch die seine Gestaltung dem Anwender die Arbeitsweise ständig veranschaulicht. Die Erfindung schafft ein Zeichenwerkzeug, vergleichbar einem Reißbrett oder einer Zeichenmaschine mit Zeichenkopf, jedoch in einer Form, die die Erfassung von Bauwerksdaten derart gestattet, daß die Daten datentechnisch verarbeitbar sind und ausgehend von diesen Daten und mit Hilfe der bekannten Algorithmen zumindest eine Schalungselementliste und ein Schalungsplan für das erfaßte Bauwerk ermittelt werden kann. Dabei bleibt aber der erfindungsgemäße Computer einfach zu bedienen und eignet sich auch für eine sporadische Nutzung, da langwierige Lern-, Übungs- und Gewöhnungsphasen nicht erforderlich sind.

Die Erfindung wird im folgenden anhand von Ausführungsbeispielen unter Bezugnahme auf die Zeichnungen genauer beschrieben, in denen zeigt:
- Fig. 1: eine schematische Darstellung eines erfindungsgemäßen Computers mit Anzeigeelement;
- Fig. 2A bis 2I: Darstellungen des Anzeigebereichs des erfindungsgemäßen Computers bei einer beispielhaften Erfassung von Bauwerksdaten;
- Fig. 3: eine zweite Ausgestaltung des Anzeigeelements eines erfindungsgemäßen Computers; und
- Fig. 4: eine dritte Ausgestaltung des Anzeigeelements eines erfindungsgemäßen Computers.

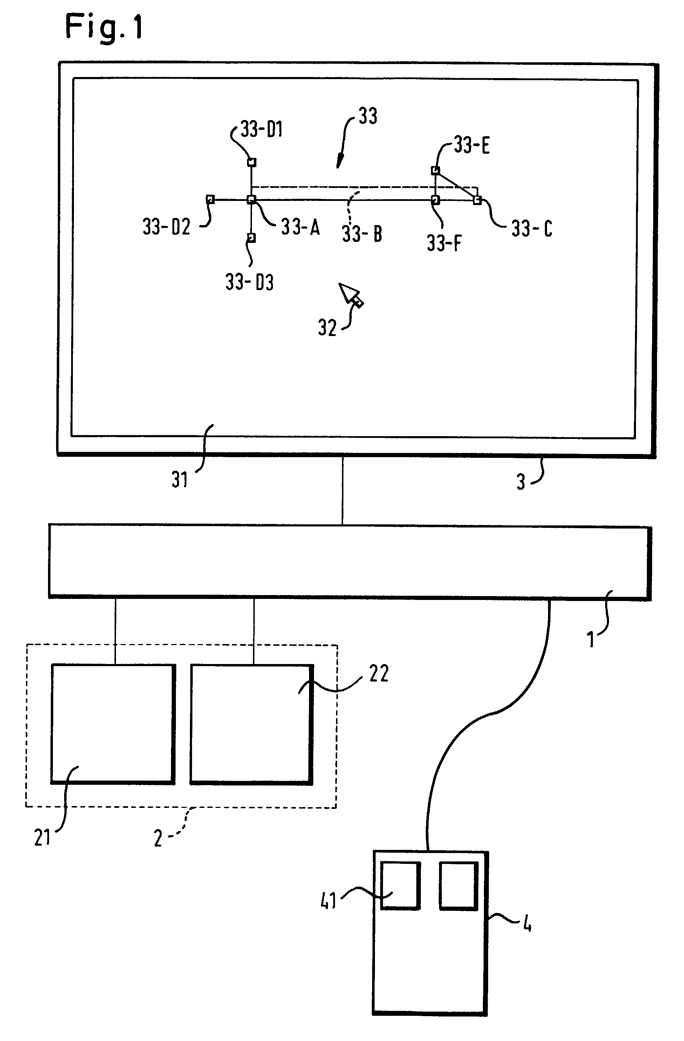

In Fig.1 ist schematisch ein erfindungsgemäß ausgestalteter Computer gezeigt, der eine Zentraleinheit 1, eine Speichereinrichtung 2, eine grafik-orientierte Anzeigeeinrichtung 3 und eine Eingabeeinrichtung 4 umfaßt.

In der Zentraleinheit 1 ist der Prozessor des Computers angeordnet, der die einzelnen Funktionen und Betriebsabläufe ausführt bzw. koordiniert. Die Zentraleinheit 1 ist mit den übrigen Komponenten des erfindungsgemäßen Computers auf die im folgenden noch beschriebene Art verbunden. Typischerweise handelt es sich bei der Zentraleinheit um einen Personal Computer (PC); jedoch sind auch andere Zentraleinheiten einsetzbar. Obwohl die Zentraleinheit 1 im weiteren Verlauf getrennt von den übrigen Komponenten dargestellt und erläutert wird, können diese übrigen Komponenten aber auch ganz oder teilweise in der Zentraleinheit 1 räumlich oder funktionell integriert sein.

In der Speichereinrichtung 2 werden die Daten des zu erfassenden Bauwerks gespeichert. Vorzugsweise umfaßt die Speichereinrichtung 2 einen flüchtigen Speicherabschnitt 21, der einen schnellen Schreib/Lese-Zugriff auf die darin gespeicherten Daten erlaubt, und einen nicht-flüchtigen Speicherabschnitt 22, in dem die dort abgelegten Daten dauerhaft gespeichert sind, der aber nur einen langsameren Zugriff gestattet. Zwischen den beiden Speicherabschnitten 21 und 22 sind die Daten übertragbar, so daß Daten, die während der Erfassung von der Zentraleinheit 1 schnell im flüchtigen Speicherabschnitt 21 abgelegt wurden, zur dauerhaften Speicherung in den nicht-flüchtigen Speicherabschnitt 22 übertragen werden können. Die Speichereinrichtung 2 nimmt auch Programmdaten auf, die eine Befehlsfolge repräsentieren, die von dem Computer abgearbeitet wird und die dessen Betrieb bestimmt. Ferner kann in der Speichereinrichtung 2 ein die Daten der Anzeigeeinrichtung 3 aufnehmender Speicherabschnitt vorgesehen sein.

Die Anzeigeeinrichtung 3 umfaßt einen Anzeigebereich 31, in dem die einzelnen Elemente eines Bauwerks, wie Wände, Decken usw. so darstellbar sind, daß eine Ansicht des Bauwerks beispielsweise in Form eines Grundrisses angezeigt wird. Dabei wird auf die Bauwerksdaten zurückgegriffen, die in der Speichereinrichtung 2 abgelegt sind. In Fig.1 ist ein Zustand gezeigt, in dem noch keine Bauwerksdaten in der Speichereinrichtung 2 gespeichert sind, so daß im Anzeigebereich 31 auch keine Ansicht eines Bauwerks dargestellt ist.

Der Benutzer bedient den Computer mit Hilfe der Eingabeeinrichtung 4, deren Bewegung auf einer Auflage erfaßt und in die Bewegung eines Zeigers 32 im Anzeigebereich 31 umgesetzt wird. Der Benutzer ist somit in der Lage, den Zeiger 32 an jede Stelle des Anzeigebereichs zu verschieben und so auf im Anzeigebereich dargestellten Elemente zu zeigen. Die Eingabeeinrichtung 4 umfaßt ferner zumindest eine Taste 41, durch deren Betätigung ausgewählte Betriebsabläufe des Computers ausgelöst werden. Welcher Betriebsablauf ausgelöst wird, hängt davon ab, welche Position der Zeiger 32 im Anzeigebereich 31 im Augenblick der Betätigung einnimmt. Als weitere (nicht dargestellte) Eingabeeinrichtung kann an die Zentraleinheit 1 eine Tastatur angeschlossen sein.

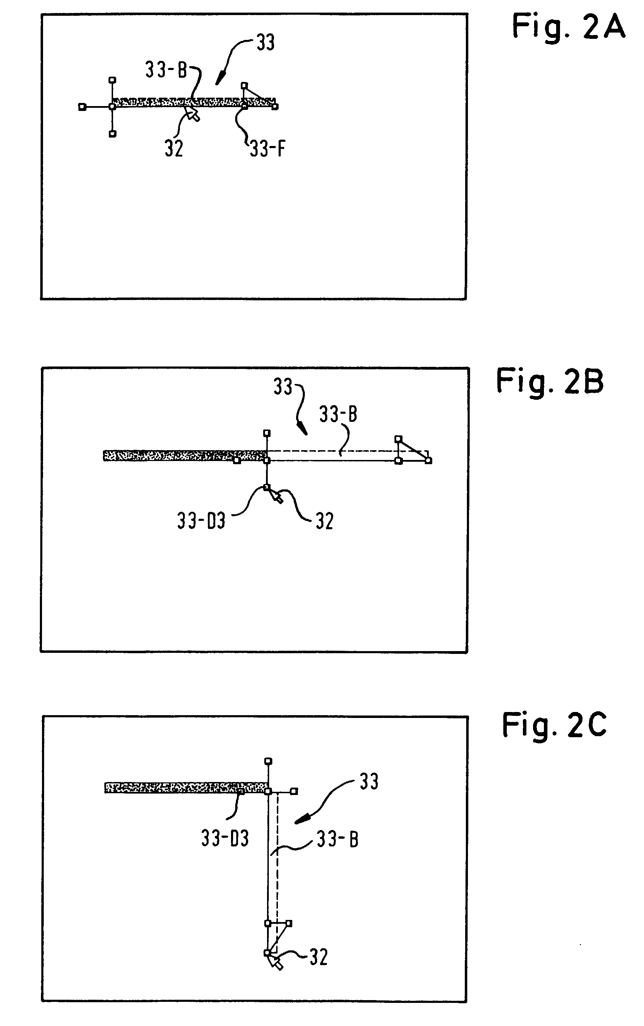

In Fig. 1 ist oberhalb des Zeigers 32 ein erfindungsgemäßes Anzeigeelement 33 des Computers dargestellt, das mehrere Bereiche 33-A, 33-B, 33-C, 33-D1, 33-D2, 33-D3, 33-E und 33-F im Anzeigebereich 31 festlegt oder definiert, beispielsweise indem die Bereiche eingerahmt werden, wie in Fig. 1 gezeigt ist. Diesen Bereichen sind bestimmte Betriebsabläufe des Computers zugeordnet, die im folgenden noch genauer unter Bezugnahme auf die Fig. 2A bis 2H beschrieben werden. Die Bereiche sind zum Teil untereinander mittels durchgezogener Verbindungslinien verbunden. Zusätzlich verbindet eine gestrichelte Verbindungslinie zwei der Bereiche.

Der erste Bereich 33-A dient zur Positionierung des Anzeigelements 33 im Anzeigebereich 31. Der zweite Bereich 33-B legt ein Bauwerkselement, beispielsweise eine Wand nach Länge und Breite fest. Er beginnt am ersten Bereich 33-A und erstreckt sich, in der Regel in Form eines Rechtecks, das durch die gestrichelte Verbindungslinie angedeutet wird, bis zu einem dritten Bereich 33-C, der zur Bestimmung der Länge des Bauwerkelements dient, das durch den zweiten Bereich 33-B definiert wird. Mehrere vierte Bereiche 33-D1, ..., 33-D3 dienen zur Veränderung der Lage des zweiten Bereichs 33-B des Anzeigeelements 33, wobei jedoch die durch den ersten Bereich 33-A bestimmte Position des Anzeigeelements 33 beibehalten bleibt. Ein fünfter Bereich 33-E verändert die Lage des zweiten Bereichs 33-B insofern, als daß der zweite Bereich 33-B von der in Fig.1 gezeigten Lage unmittelbar oberhalb der Verbindungslinie zwischen dem ersten und dem dritten Bereich 33-A und 33-C in eine Lage unmittelbar unterhalb dieser Verbindungslinie verschoben wird, also gewissermaßen um die durchgezogene Verbindungslinie geklappt wird. Ein sechster Bereich 33-F dient ebenfalls zur Veränderung der Lage des zweiten Bereichs 33-B, jedoch derart, daß das gesamte Anzeigeelement 33 sprungartig so verschoben wird, daß der erste Bereich 33-A die Position des dritten Bereichs 33-C einnimmt. Die Anordnung der vierten Bereiche 33-D1,..., 33-D3 und in gewissem Sinne auch der dritten und sechsten Bereiche 33-C und 33-F, die ebenso wie die vierten Bereiche die Position und Lage des gesamten Anzeigeelements 33 und damit des Bauwerkselements bestimmen, verdient besondere Beachtung. Diese Bereiche sind sternförmig um den ersten Bereich 33-A herum angeordnet.

Die Festlegung des Bauwerkelements durch den zweiten Bereich 33-B wird erfindungsgemäß zur Erfassung der Daten dieses Bauwerkselements genutzt. Die Position und Lage des Bauwerkselements sind durch die Position und Lage des Anzeigeelements 33 genau bestimmt. Die Daten, die in der Speichereinrichtung 2 des Computers die Position und Lage des zweiten Bereichs 33-B des Anzeigeelements 33 festlegen, werden als Daten des Bauwerkselements vom Computer übernommen. Da alle Bauwerkselemente in demselben Anzeigebereich 31 dargestellt werden, ist es möglich, sämtliche Daten unter einem Maßstab zu erfassen. Zweckmäßigerweise zeigt der Computer dem Benutzer in einem Teil des Anzeigebereichs die Abmessungen des Bauwerkselements an, die durch die momentane Position und Lage des zweiten Bereichs 33-B des Anzeigeelements 33 bestimmt werden, und ändert diese Anzeige entsprechend der Veränderung des zweiten Bereichs 33-B. Die Winkellage kann dabei entweder in Bezug auf eine Grundlinie oder bezogen auf das zuvor erfaßte Bauwerkselement erfolgen. Vorzugsweise erfolgt die Anzeige in SI-Einheiten, so daß die Länge und Breite, sowie die Winkellage des Bauwerkselements unmittelbar verständlich sind. Auf diese Weise wird der Bezug zu den realen Abmessungen des erfaßten Bauwerks bzw. zur Anordnung seiner Elemente zueinander hergestellt. Vorzugsweise ist der Maßstab mit Hilfe der Eingabeeinrichtung 4 oder einer (nicht dargestellten) Tastatur eingebbar bzw. veränderbar, damit eine optimale Ausnutzung des Anzeigebereichs 31 bei allen Bauwerksgrößen gewährleistet ist.

Im folgenden wird anhand der Figuren 2A bis 2H der Betrieb des erfindungsgemäßen Computers beschrieben. In den Figuren 2A bis 2H ist aber lediglich der Anzeigenbereich 31 dargestellt, in dem sich das Anzeigeelement 33 befindet bzw. bewegt werden kann.

In Figur 2A ist das Anzeigeelement 33 in einer Lage gezeigt, die im wesentlichen der Ausgangslage des Anzeigeelements 33 in Figur 1 entspricht. Im Unterschied zur Darstellung in Figur 1 ist jedoch in Figur 2A der zweite Bereich 33-B ausgefüllt. Dies wurde erreicht indem die Spitzen des Zeigers 32 in den zweiten Bereich 33-B verschoben und die Taste 41 der Eingabeeinrichtung 4 betätigt wurde. Der erfindungsgemäße Computer übernimmt dann die Daten des zweiten Bereiches 33-B als Daten eines ersten Bauwerkselements. Indem der zweite Bereich 33-B ausgefüllt dargestellt wird, wird diese Datenübernahme angezeigt.

Durch Verschieben des Zeigers 32 in den Bereich 33-F und Betätigen der Taste 41 wird folgender Betriebsablauf im erfindungsgemäßen Computer ausgelöst: Das Anzeigeelement 33 wird sprungartig in die in Figur 2B gezeigte Position verschoben.

In Figur 2C ist ein Zustand gezeigt, der erreicht wird, wenn ausgehend von Figur 2B der Zeiger 32 in den vierten Bereich 33-D3 bewegt und die Taste 41 betätigt wird. Der erfindungsgemäße Computer reagiert darauf durch Drehen des Anzeigeelements 33 in die Richtung, die von dem vierten Bereich 33-D3 vorgegeben wird, in dem sich der Zeiger 32 befindet, wenn die Taste 41 betätigt wird. In Figur 2C erstreckt sich der zweite Bereich 33-B nun nach unten.

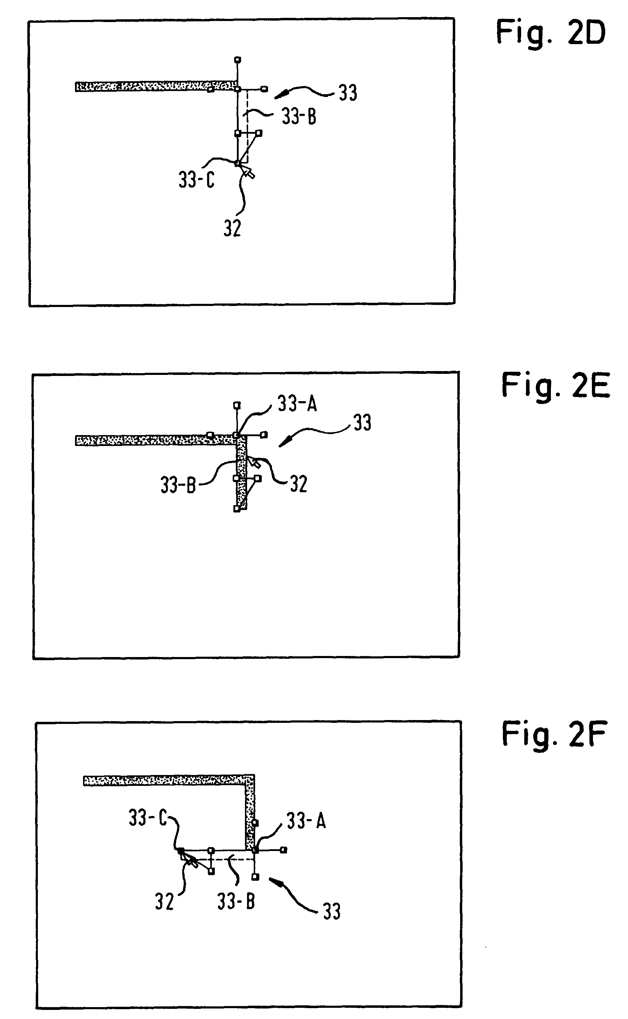

Um die Längserstreckung des zweiten Bereiches 33-B zu verkleinern, wie in Figur 2D gezeigt ist, wird der Zeiger 32 in den dritten Bereich 33-C des Anzeigeelements 33 bewegt und die Taste 41 gedrückt und festgehalten. Wird die Eingabeeinrichtung 4 mit gedrückter Taste 41 dann verschoben, reagiert der erfindungsgemäße Computer indem die Längserstreckung des zweiten Bereichs 33-B verkleinert oder vergrößert wird. Im in Figur 2D gezeigten Fall wurde der zweite Bereich 33-B verkürzt.

In Figur 2E ist die Anzeige des erfindungsgemäßen Computers für den Fall gezeigt, daß ausgehend von Figur 2D der Zeiger 32 in den zweiten Bereich 33-B bewegt und die Taste 41 der Eingabeeinrichtung 4 betätigt wurde. Der erfindungsgemäße Computer reagiert darauf, wie bereits oben beschrieben, indem die Daten des zweiten Bereichs 33-B als Daten eines zweiten zu erfassenden Bauwerkelements erfaßt werden, und der zweite Bereich 33-B ausgefüllt wird.

Um ausgehend vom Zustand gemäß Figur 2E zur Anzeige gemäß Figur 2F zu gelangen, ist wie folgt vorzugehen. In Figur 2E wird das Zeigeelement 32 in den ersten Bereich 33-A des Anzeigeelements 33 bewegt und die Taste 41 gedrückt und gehalten. Durch Verschieben der Eingabeeinrichtung 4 kann dann das Anzeigeelement 33 so verschoben werden, daß der erste Bereich 33-A die in Figur 2F gezeigte Position einnimmt, wenn die Taste 41 losgelassen wird. Jedoch ist dann das Anzeigeelement 33 noch in der in Figur 2E gezeigten Weise, nämlich nach unten gerichtet. Erst durch Bewegen des Zeigerelements 32 in den vierten Bereich 33-D3 und Betätigen der Taste 41 wird das Anzeigeelement 33 in die in Figur 2F gezeigte Lage gedreht.

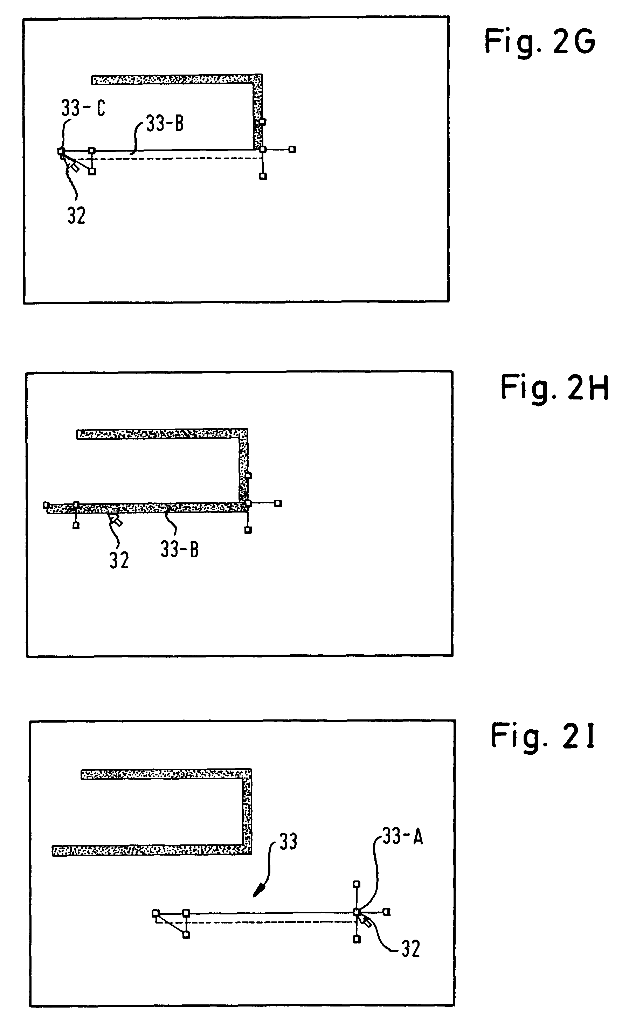

Indem das Zeigeelement 32 in den dritten Bereich 33-C bewegt, die Taste 41 niedergedrückt und festgehalten und die Eingabeeinrichtung 4 bewegt wird, kann die Längserstreckung des zweiten Bereichs 33-B vergrößert werden. Der erfindungsgemäße Computer reagiert entsprechend und stellt den zweiten Bereich 33-B wie in Figur 2G gezeigt dar.

Der Übergang zu Figur 2H wird bewirkt indem das Zeigeelement 32 in den zweiten Bereich 33-D gemäß Figur 2G gebracht und die Taste 41 niedergedrückt wird. Der erfindungsgemäße Computer erfaßt die Daten des zweiten Bereichs 33-B als Daten eines dritten zu erfassenden Bauwerkselements und zeigt das erfaßte Bauwerkselement an, indem der zweite Bereich 33-B ausgefüllt dargestellt wird.

In Figur 2I ist eine weitere Darstellung des Anzeigebereichs des erfindungsgemäßen Computers gezeigt, bei der das Anzeigeelement 33 von den bereits erfaßten Bauwerkselementen wegbewegt ist. Dies wird erreicht indem der Zeiger 32 in den ersten Bereich 33-A des Anzeigeelements 33 bewegt, die Taste 41 niedergedrückt und festgehalten und die Eingabeeinrichtung 4 verschoben wird. In Figur 2I sind die drei Bauwerkselemente erkennbar, die mit Hilfe des erfindungsgemäßen Computers erfaßt wurden. Dieses U-förmige Bauwerk steht nun in Form von datentechnisch verarbeitbaren Daten zur Verfügung, um mit bekannten Algorithmen Schalungselemente und Schalungspläne aufzustellen.

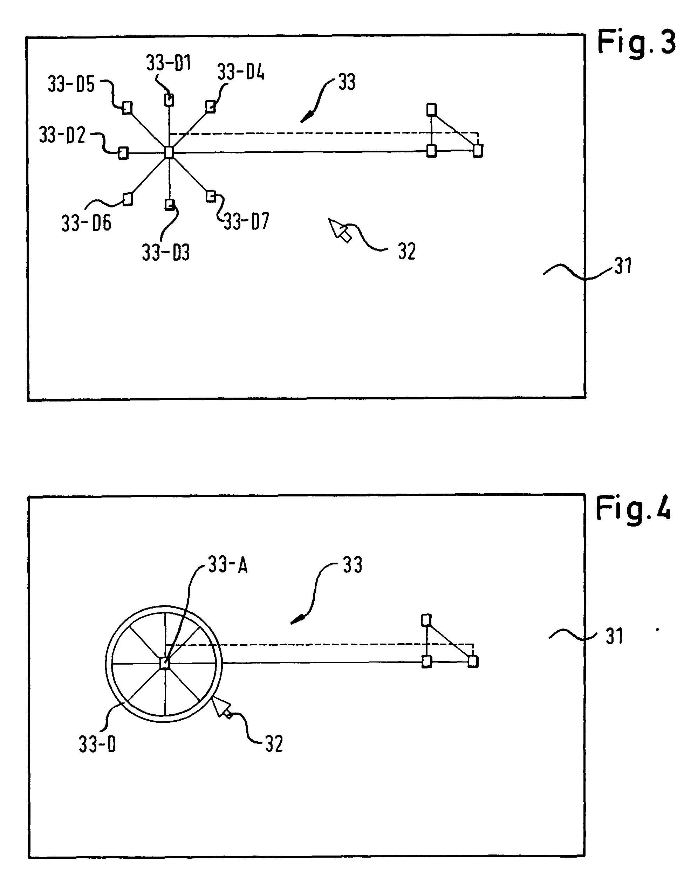

In Figur 3 ist der Anzeigebereich 31 eines erfindungsgemäßen Computers dargestellt, bei dem das Anzeigeelement 33 weitere vierte Bereiche 33-D4, ..., 33-D7 aufweist. Wird das Zeigeelement 32 in einen dieser Bereiche bewegt und die Taste 41 der Eingabeeinrichtung 4 betätigt, reagiert der erfindungsgemäße Computer, indem das Anzeigeelement 33 in die entsprechende Richtung gedreht wird. Die Bereiche 33-D4, ..., 33-D7 entsprechen damit den vierten Bereichen 33-D1, ..., 33-D3, erlauben aber eine Drehung des Anzeigeelements 33 in Schritten von 45° anstelle von 90°.

In Figur 4 ist ein weiteres Anzeigeelement 33 dargestellt, bei dem die mehreren vierten Bereiche des ersten und zweiten Ausführungsbeispiels ersetzt wurden durch einen ringförmigen Bereich 33-D der um den ersten Bereich 33-A herum angeordnet ist. Wird der Zeiger 32 in den ringförmigen Bereich 33-D bewegt und die Taste 41 der Eingabeeinrichtung 4 betätigt, reagiert der erfindungsgemäße Computer indem das Anzeigeelement 33 in die durch die Position des Zeigers 32 vorgegebene Richtung gedreht wird. Vorzugsweise führt der erfindungsgemäße Computer auch diese Drehbewegung schrittweise, beispielsweise in Schritten von 10° durch.

## Patentansprüche

1. Computer zur Erfassung der geometrischen Daten von Bauwerkselementen, mit
einer Speichereinrichtung (2) zur Speicherung der Daten,
einer grafik-orientierten Anzeigeeinrichtung (3) mit einem Anzeigebereich (31) zur Darstellung einer Ansicht der Bauwerkselemente auf der Grundlage der gespeicherten Daten,
einer Eingabeeinrichtung (4) für das Eingeben und Ändern von Daten unter Ausnutzung und im Zusammenwirken mit der Anzeigeeinrichtung (3), wobei mit der Eingabeeinrichtung (4) mittels eines im Anzeigebereich bewegbaren Zeigers (32) ein Anzeigeelement (33), das im Anzeigebereich angezeigt wird, beeinflußbar ist,
dadurch **gekennzeichnet,** daß
das Anzeigeelement (33)
einen mit der Eingabeeinrichtung zusammenwirkenden, ersten Bereich (33-A) zur Positionierung des Anzeigeelements,
einen mit der Eingabeeinrichtung zusammenwirkenden, zweiten Bereich (33-B), der an dem ersten Bereich (33-A) beginnt, zum Auslösen der Erfassung der Daten des durch diesen Bereich festgelegten Bauwerkselements,
einen mit der Eingabeeinrichtung zusammenwirkenden, dritten Bereich (33-C), bis zu dem sich der zweite Bereich (33-B) erstreckt, zur Änderung der Erstreckung des zweiten Bereichs (33-B) zwischen dem ersten und dem dritten Bereich(33-A, 33-C), und
mehrere mit der Eingabeeinrichtung zusammenwirkende, vierte Bereiche (33-D1, ... 33-D7) zur Änderung der Lage des zweiten Bereichs (33-B) des Anzeigeelements, indem der zweite Bereich (33-B) um den ersten Bereich um einen durch die Lage des jeweiligen vierten Bereichs (33-D) vorgegebenen Winkel gedreht wird,
im Anzeigebereich (31) der Anzeigeeinrichtung festlegt,
wobei der dritte Bereich (33-C) und die vierten Bereiche (33-D1, ..., 33-D7) sternförmig um den ersten Bereich (33-A) herum angeordnet sind.

2. Computer zur Erfassung der geometrischen Daten von Bauwerkselementen nach Anspruch 1, mit einem fünften Bereich (33-E) zur Änderung der Lage des zweiten Bereichs (33-B) des Anzeigeelements (33) von einer Lage unmittelbar oberhalb einer Verbindungslinie zwischen dem ersten und dritten Bereich (33-A, 33-C) in eine Lage unmittelbar unterhalb der Verbindungslinie.

3. Computer zur Erfassung der geometrischen Daten von Bauwerkselementen nach Anspruch 1 oder 2, mit einem sechsten Bereich (33-F) zur Verschiebung des Anzeigeelements (33) derart, daß nach der Verschiebung der erste Bereich (33-A) die letzte Position des dritten Bereichs (33-C) einnimmt.

4. Computer zur Erfassung der geometrischen Daten von Bauwerkselementen nach einem der Ansprüche 1 bis 3, dadurch **gekennzeichnet**, daß die dritten und vierten Bereiche (33-C, 33-D1, ..., 33-D7) derart sternförmig um den ersten Bereich (33-A) angeordnet sind, daß dazwischen jeweils Winkel von 90°, 45° oder 10° eingeschlossen sind.

## Claims

1. Computer for determining geometric data of building elements, having
a memory device (2) for storing the data,
a graphic-orientated display device (3) with a display area (31) for representing a view of the building elements on the basis of the stored data,
an input device (4) for the input and alteration of data for use and co-operation with the display device (3), wherein by means of the input device (4), with the aid of a pointer (32) movable in the display area, it is possible to influence a display element (33) which is displayed in the display area,
characterised in that
the display element (33) determines in the display area (31) of the display device
a first area (33-A), co-operating with the input device, for positioning the display device,
a second area (33-B), co-operating with the input device, which starts in the first area (33-A), for triggering the location of the data of the building elements determined by this area,
a third area (33-C), co-operating with the input device, up to which the second area (33-B) extends, for changing the extent of the second area (33-B) between the first and the third area (33-A, 33-C), and
a number of fourth areas (33-D1,...33-D7) for changing the position of the second area (33-B) of the display element, in which the second area (33-B) is rotated about the first area at an angle predetermined by the position of the respective fourth area (33-D),
wherein the third area (33-C) and the fourth area (33-D1,..., 33-D7) are arranged in a star-shape around the first area (33-A).

2. Computer for the determination of geometric data of building elements according to claim 1, with a fifth area (33-E) for changing the position of the second area (33-B) of the display element (33) from a position directly above a connecting line between the first and third area (33-A, 33-C) into a position directly beneath the connecting line.

3. Computer for determining the geometric data of building elements according to claim 1 or 2, with a sixth area (33-F) for displacing the display element (33)in such a way that after the displacement the first area (33-A) takes the last position of the third area (33-C).

4. Computer for determining the geometric data of building elements according to one of the claims 1 to 3, characterised in that the third and fourth areas (33-C, 33-D1,..., 33-D7) are arranged in star-shape around the first area (33-A) in such a way as to form there between angles of 90°, 45° or 10°, respectively.

## Revendications

1. Ordinateur pour la détermination des données géométriques d'éléments de construction, comportant
un dispositif à mémoire (2), pour mémoriser les données,
un dispositif d'affichage (3) pour applications graphiques, comportant une zone d'affichage (31) pour la représentation d'une vue des éléments de construction sur base des données mémorisées,
un dispositif d'introduction (4) pour l'introduction et la modification de données en s'aidant du dispositif d'affichage (3) et en coopération avec lui, un élément d'affichage (33) affiché dans la zone d'affichage pouvant être influencé par le dispositif d'introduction (4) au moyen d'un pointeur (32) apte à être déplacé dans la zone d'affichage,
caractérisé en ce que
l'élément d'affichage (33) définit, dans la zone d'affichage (31) du dispositif d'affichage:
une première zone (33-A), coopérant avec le dispositif d'introduction, pour positionner l'élément d'affichage,
une deuxième zone (33-B), coopérant avec le dispositif d'introduction, qui commence sur la première zone (33-A), pour déclencher la détermination des données de l'élément de construction défini par cette zone,
une troisième zone (33-C), coopérant avec le dispositif d'introduction, jusqu'à laquelle s'étend la deuxième zone (33-B), pour modifier l'étendue de la deuxième zone (33-B) entre la première et la troisième zone (33-A, 33-C), et
plusieurs quatrièmes zones (33-D1, ..., 33-D7) coopérant avec le dispositif d'introduction, pour modifier la position de la deuxième zone (33-B) de l'élément d'affichage en faisant tourner la deuxième zone (33-B) autour de la première zone d'un angle défini par la position de la quatrième zone (33-D),
la troisième zone (33-C) et les quatrièmes zones (33-D1, ..., 33-D7) étant disposées en étoile autour de la première zone (33-A).

2. Ordinateur pour la détermination des données géométriques d'éléments de construction selon la revendication 1, comportant une cinquième zone (33-E) pour modifier la position de la deuxième zone (33-B) de l'élément d'affichage (33) depuis une position située immédiatement au-dessus d'une ligne de liaison entre la première et la troisième zone (33-A, 33-C) jusque dans une position située immédiatement en dessous de la ligne de liaison.

3. Ordinateur pour la détermination des données géométriques d'éléments de construction selon les revendications 1 ou 2, comportant une sixième zone (33-F) pour le déplacement de l'élément d'affichage (33) de telle sorte que, après le déplacement, la première zone (33-A) prenne la dernière position de la troisième zone (33-C).

4. Ordinateur pour la détermination des données géométriques d'éléments de construction selon l'une des revendications 1 à 3, caractérisé en ce que la troisième et la quatrième zone (33-C, 33-D1, ..., 33-D7) sont disposées en étoile autour de la première zone (33-A) de telle sorte qu'elles forment chaque fois entre elles un angle de 90°, 45° ou 10°.
